# EUROPÄISCHE PATENTSCHRIFT

(11) **EP 0 861 988 B1**
(45) Veröffentlichungstag und Bekanntmachung des Hinweises auf die Patenterteilung: **24.03.2004**
(21) Anmeldenummer: 98250061.3
(22) Anmeldetag: 23.02.1998
(51) Int. Cl.: F16C 1/22

(54) **Vorrichtung zum automatischen, stufenweisen Seillängenausgleich eines Bowdenzugsystems**
Device for automatic staged adjustment of the length of a cable control system
Dispositif de réglage automatique étagé de la longueur d'un système de commande par câble

(30) Priorität: 21.02.1997 DE 19706866
(43) Veröffentlichungstag der Anmeldung: 02.09.1998
(73) Patentinhaber: Brose Fahrzeugteile GmbH & Co. KG, 96450 Coburg (DE)
(72) Erfinder: Klippert, Uwe, 36280 Oberaula (DE); Saunus, Christian, 08223 Grunbach (DE); Scheck, Georg, 96479 Weitramsdorf (DE)
(74) Vertreter: Ninnemann, Detlef, Dipl.-Ing.

(56) Entgegenhaltungen:
- WO-A-93/22571
- WO-A-96/25604
- DE-A- 3 833 280
- DE-C- 19 603 893
- US-A- 4 799 400

## Beschreibung

Die Erfindung betrifft eine Vorrichtung zum automatischen, stufenweisen Seillängenausgleich eines Bowdenzugsystems gemäß dem Oberbegriff des Patentanspruchs 1. Er zeichnet sich durch einen einfachen Aufbau, eine sichere Funktionsweise und die Möglichkeit seiner Herstellung wahlweise aus Kunststoff oder Metall bzw. einer Kombination aus beiden Werkstoffen aus.

Seillängenausgleichsvorrichtungen werden überall dort eingesetzt, wo Seile als kraftübertragende Stellglieder eingesetzt werden und die unter der Krafteinwirkung auftretende Seillängung zur Aufrechterhaltung der Funktion des Systems auszugleichen ist.

Vielen Seillängenausgleichsvorrichtungen gemeinsam ist die Verwendung von zwei zueinander verschiebbaren Teilen, die von einer Feder unter Spannung gehalten werden und eine Stellbewegung dann ausführen, wenn eine Seillose auftritt. Diese Stellbewegung entspricht quasi einer Verlängerung des Bowdenrohres.

Aus der DE 38 05 046 C1 ist es bekannt, die infolge der Stellbewegung erreichte Relativposition der beiden zueinander verschiebbaren Teile durch Rastelemente zu verriegeln. Eine Vielzahl schmaler, aufeinanderliegender Rastelemente, die nacheinander hinter das freie Ende des verschiebbaren Teils fallen können, gewährleisten einen feinstufigen Seillängenausgleich. Diese Vorrichtung ist jedoch nicht in der Lage, zwischen einer sogenannten echten Seillosen und einer scheinbaren Seillosen, die bei hoher Belastung einer Seilschlaufe eines Seilfensterhebers im unbelasteten Bereich der Seilschlaufe auftritt, zu unterscheiden. Somit kann es zu erheblichen Verspannungen im System kommen, die aufgrund erhöhter Reibung zu einer Verschlechterung des Wirkungsgrades der Verstellvorrichtung und zu einem beschleunigten Verschleiß führen.

Aus der EP 0 658 696 A1 ist eine Seillängenausgleichsvorrichtung mit einem rohrförmigen gehäuseseitigen Teil und einem darin verschiebbar gelagerten bowdenrohrseitigen Teil bekannt. Am bowdenrohrseitigen Teil stützt sich einerseits das Bowdenrohr und andererseits eine Druckfeder ab, die das bowdenrohrseitige Teil in Richtung des Bowdenrohres zu Verschieben sucht. In der Wandung des rohrförmigen gehäuseseitigen Teils sind am Umfang verteilt mehrere Schlitze eingebracht, durch die Rastzähne eines federelastisch ausgebildeten offenen Ringes hindurchgreifen und mit der Gegenverzahnung des bowdenrohrseitigen Teils in Eingriff treten können.

Die Ausdehnung der Schlitze in Verschieberichtung ist größer als die Höhe der Rastzähne, so daß bei einer Verschiebebewegung des bowdenrohrseitigen Teils zunächst die Rastzähne des federelastischen Ringes mitgenommen werden, bis sie auf die als Anschlage wirkenden Begrenzungsflächen der Schlitze treffen. Erst bei einer darüber hinausgehenden Verschiebebewegung kommt es auch zu einer Relativbewegung zwischen dem federelastischen und dem bowdenrohrseitigen Teil und zu einer dauerhaften, d.h. verriegelten Stellbewegung (Seillängenausgleichsbewegung), und zwar wenn die Verschiebebewegung wenigstens der Summe aus dem axialen Bewegungsspielraum des federelastischen Ringes in den Schlitzen des gehäuseseitigen Teils und aus der Teilung der sägezahnförmigen Verzahnung des bowdenrohrseitigen Teils ist. In jedem Falle steht der bezeichnete axiale Bewegungsspielraum zur Spannungsentlastung des Systems zur Verfügung indem die Stützkräfte des Bowdenrohres eine begrenzte Rückstellbewegung des verschiebbaren bowdenrohrseitigen Teils bewirken, bis die Rastzähne des federelastischen Ringes den anderen Anschlag der Schlitze erreicht haben.

Die beschriebene Vorrichtung besitzt jedoch den Nachteil, daß der die Rastzähne tragende federelastische Ring wegen der für die Montage notwendigen großen Spreizfähigkeit nur aus einem elastischen Werkstoff gefertigt werden kann. Damit sind die von ihm übertragbaren Kräfte jedoch recht begrenzt.

Eine in ihrer Wirkungsweise identische und in ihrem Aufbau sehr ähnliche Vorrichtung beschreibt die WO 96/25604. Auch sie besteht aus einem gehäuseseitigen Teil und einem darin verschiebbaren hülsenartigen bowdenseitigen Teil mit einer Außenverzahnung, in die die Verzahnung eines Verriegelungselements eingreifen kann. Auch bei dieser Lösung ist das Verriegelungselement zwischen zwei Anschlägen verschiebbar gelagert, so daß ein Bewegungsspielraum mit Spielvorhaltung entsteht, der dem System ein axiales Längsspiel zur Verfügung stellt, das eine übermäßige Verspannung der Verstellvorrichtung verhindert.

Von Nachteil ist jedoch, daß die innenliegende Anordnung des Rastelements zur Ausbildung vergleichsweise kleiner Rastzähne führt. In Verbindung mit dem wegen des Erfordernisses der elastischen Verformbarkeit notwendigerweise aus Kunststoff zu fertigenden Verriegelungselement kann auch diese Vorrichtung nur begrenzt belastet werden.

Der Erfindung liegt die Aufgabe zugrunde, eine Vorrichtung zum automatischen, stufenweisen Seillängenausgleich mit Spielvorhaltung zu entwickeln, die einen einfachen Aufbau, eine gute Anpaßbarkeit auch an hohe Belastungen sowie eine einfache und sichere Montierbarkeit aufweist.

Erfindungsgemäß wird die Aufgabe durch das kennzeichnende Merkmal des Patentanspruchs 1 gelöst. Die übrigen Ansprüche geben Vorzugsvarianten der Erfindung an.

Demnach sind die axial ausgerichteten Anschläge, zwischen denen das Verriegelungselement lagert, Bestandteil des bowdenrohrseitigen Teils. Die Rastelemente des Verriegelungselements sind radial nach außen gerichtet und können mit den korrespondierenden Rastelementen, die sich axial entlang des gehäuseseitigen Teils erstrecken, in Eingriff gebracht werden. Um das zur Vermeidung einer unerwünscht hohen Verspannung des Bowdenzugsystems notwendige Spiel bereitzustellen, stehen drei technische Varianten zur Verfügung, die auch miteinander kombiniert werden können:
(A) Der Abstand zwischen den Anschlägen des bowdenrohrseitigen Teils wird größer gewählt als die axiale Ausdehnung des Verriegelungselements. Die Differenz bestimmt die axiale Verschiebbarkeit des Verriegelungselements und somit das Maß des Spiels, das einer unerwünschten Systemverspannung entgegenwirkt.
(B) Die Anschläge des bowdenrohrseitigen Teils können aber auch so eng gesetzt werden, daß ausschließlich eine radiale Verschiebbarkeit des Verriegelungselements gewährleistet ist, wobei das Seil durch das Verriegelungselement von der Zugachse weggedrückt wird. Während des Prozesse des Ineingrifftretens der Rastelemente des bowdenrohrseitigen und des gehäuseseitigen Teils verringert sich die Auswölbung des Seils. Die Differenz der Seillänge zwischen der maximalen und der minimalen Seilauswölbung ist das Maß des Spiels zur Vermeidung von Systemverspannungen.
(C) Eine weitere Möglichkeit zur Bereitstellung des Spiels besteht in der Verwendung eines Hinterschnittes für die ineinandergreifenden Rastelemente, die vorzugsweise sägezahnförmig ausgebildet sein sollten. Beim Ineinandergreifen der Verzahnungen kommt es dann zu einer axialen Setzbewegung des bowdenrohrseitigen Teils in Richtung der Stützkraft des Bowdenrohres.

Gemäß einer Vorzugsvariante der Erfindung ist im bowdenrohrseitigen Teil der Seillängenausgleichsvorrichtung eine Ausnehmung vorgesehen, die das Verriegelungselement - vollständig aufnehmen kann. In axialer Richtung wird die Ausnehmung von sich gegenüberliegenden Anschlägen begrenzt, deren Abstand größer als die Länge des Verriegelungselements ist. Dadurch wird das zur Vermeidung der Systemverspannung notwendige Spiel vorgehalten,d.h.,ein seillängenausgleichender Rastvorgang kann erst nach Überwindung des konstruktiv vorgesehenen Spiels erfolgen. Dieses Spiel sollte vorzugsweise nicht geringer sein als die Teilung der Rastelemente.

Den Rastelementen des Verriegelungselements stehen Rastelemente des gehäuseseitigen Teils gegenüber, die sich entlang der Verschieberichtung des bowdenseitigen Teil erstrecken. Sägezahnförmige Rastelemente haben den Vorteil, daß ihre geneigten Flanken bei einer seillängenausgleichenden Verschiebebewegung leicht aufeinander gleiten und das Lösen der formschlüssigen Verriegelung fördern, während die radialgerichteten Flanken eine Rückstellbewegung des bowdenrohrseitigen Teils über das vorgehaltene Spiel hinaus verhindern. Sägezahnförmige Rastelemente mit Hinterschnitt besitzen bei einer Belastung in Verriegelungsrichtung einen selbstverstärkenden Effekt, der den Formschluß - und damit die Verriegelung - sichert. Bei Verwendung eines stark ausgebildeten Hinterschnitts kann auch dadurch ein zusätzliches Spiel vorgehalten werden, das unerwünschten Verspannungen des Bowdenzugsystems entgegenwirkt. Schließlich geht die vollständige Ineingriffnahme der Rastelemente einher mit einer dem Maß des Hinterschnitts entsprechenden Rückstellbewegung des bowdenrohrseitigen Teils.

Da das Verriegelungselement innerhalb einer Ausnehmung des Schaftes des bowdenrohrseitigen Teils geführt ist, muß ein Durchgang für das Seil bereitgestellt werden. Dies kann beispielsweise durch einen offenen oder geschlossenen Kanal im Verriegelungselement geschehen. Es ist aber auch möglich, die Dicke des Verriegelungselements derart zu bemessen, daß dieses auch bei durchgeführtem Seil noch vollkommen von der Ausnehmung des bowdenseitigen Teils aufgenommen werden kann.

Gemäß einer Variante der Erfindung steht die innenliegende, sich im wesentlichen axial erstreckende Wandung des Verriegelungselements stets mit dem Seil in Berührung. Dadurch wird bei gespanntem Seil von diesen auf das Verriegelungselement eine in Verriegelungsrichtung wirkende Kraft ausgeübt. Eine Entriegelung kann also nur erfolgen, wenn das Seil eine Lose aufweist und einer radialen Bewegung des Verriegelungselements nachgibt. Es lassen sich zusätzlich ohne weiteres konstruktive Sicherungsmaßnahmen vorsehen, die auch bei einer sehr hohen Belastung den Verriegelungszustand garantieren. Dies kann durch radialwirkende Stützflächen zwischen dem Verriegelungselement und dem bowdenrohrseitigen Teil erreicht werden, die miteinander in Eingriff treten, wenn die axialwirkenden Anschläge dieser Teile infolge einer bowdenseitigen Belastung aufeinandergepreßt sind.

Eine weitere Erfindungsvariante sieht die Verwendung eines Verriegelungselements vor, an dessen innenliegenden Rückwand eine Feder abgestützt ist, die sich andererseits an der Innenwandung der Ausnehmung des bowdenrohrseitigen Teils abstützt und so das Verriegelungselement federelastisch in Richtung der Gegenverzahnung des gehäuseseitigen Teils verspannt. Vorzugsweise bilden die Feder und das Verriegelungselement eine einstückige Einheit, insbesondere in Form eines Kunststoffspritzteils.

Um eine besonders einfache Montage der Seillängenausgleichsvorrichtung in das Bowdenzugsystem und eine einfache sowie sichere Inbetriebnahmen der Vorrichtung zu gewährleisten, sind Mittel zur Arretierung des bowdenseitigen Teils in einer weit in das gehäuseseitige Teil eingeführten Stellung, bei der die Feder zwischen dem gehäuseseitigen Teil und dem dazu verschiebbaren bowdenrohrseitigen Teil die größte Spannung aufweist, vorgesehen. Dazu eignet sich z. B. ein mit dem gehäuseseitigen Teil verbundener Federbügel, der in der beschriebenen Position in eine Rastnase des bowdenseitigen Teils oder dergleichen eingreifen kann. Bei der ersten größeren Belastung des Bowdenzugsystems, z.B. bei Erreichen des Blockzustandes eines Bowderohrfensterhebers, wird das bowdenrohrseitige Teil soweit in das gehäuseseitige Teil hineingedrückt, so daß sich die Arretierung durch den Federbügel selbsttätig wieder löst. Voraussetzung hierfür ist natürlich, daß die Feder noch hinreichend komprimierbar ist und die Blockkraft die Federkraft übertrifft.

Da die Rastelemente des gehäuseseitigen Teils innenliegend sind, sollte zur Vermeidung komplizierter Herstellungswerkzeuge eine zweiteilige Ausführung gewählt werden. Dazu kann beispielsweise ein Schieber dienen; der die Rastelemente trägt und in eine paßfähige Führung des gehäuseseitigen Teils eingeschoben wird.

Nachfolgend wird die Erfindung anhand von Ausführungsbeispielen und den dargestellten Figuren näher erläutert. Es zeigen:
Figur 1 Schnittdarstellung einer Seillängenausgleichsvorrichtung mit Elementen zur Fixierung des Verriegelungselements bei bowdenrohrseitiger Belastung, mit einem Federbügel zur Arretierung der Montageposition des bowdenrohrseitigen Teils innerhalb des gehäuseseitigen Teils und mit einer außenliegenden Feder zur Aufrechterhaltung der Seilspannung;
Figur 2a Explosionsdarstellung der Einzelteile der Seillängenausgleichsvorrichtung gemäß Figur 1 ;
Figur 2b perspektivische Darstellung der Einzelteile der Seillängenausgleichsvorrichtung gemäß Figur 1 vor dem Einführen des bowdenrohrseitigen Teils in das gehäuseseitige Teil;
Figur 3a perspektivische Darstellung einer axial aufgebrochenen Seillängenausgleichsvorrichtung gemäß Figur 1 unmittelbar vor dem Erreichen der Verriegelungsposition des bowdenrohrseitigen Teils;
Figur 3b perspektivische Darstellung einer axial aufgebrochenen Seillängenausgleichsvorrichtung gemäß Figur 1 in der Verriegelungsposition des bowdenrohrseitigen Teils;
Figur 3c perspektivische Darstellung der Seillängenausgleichsvorrichtung gemäß Figur 1 in der Verriegelungsposition des bowdenrohrseitigen Teils;
Figur 4a Querschnitt durch die Seillängenausgleichsvorrichtung gemäß Figur 3b im Bereich des Verriegelungselements;
Figur 4b Ansicht der Seillängenausgleichsvorrichtung von Seiten des Adapters;
Figur 5a Schnittdarstellung durch eine Seillängenausgleichsvorrichtung mit einem Seilkanal durch das Verriegelungselement und mit einer innenliegenden Feder zur Aufrechterhaltung der Seilspannung, wobei die Feder maximal komprimiert ist;
Figur 5b wie Figur 5a, jedoch nach Ausführung einer Seillängenausgleichsbewegung mit noch unbelastetem Seil vor dem Ineingrifftreten der Sägeverzahnungen des Verriegelungselements und des gehäuseseitigen Teils;
Figur 5c wie Figur 5b, jedoch nach dem Spannen des Seils, wobei die Sägeverzahnungen des Verriegelungselements und des gehäuseseitigen Teils in Eingriff treten;
Figur 5d wie Figur 5c, jedoch nach der Rückstellbewegung des bowdenrohrseitigen Teils bis zum Anschlag an das Verriegelungselement, wobei das Spiel zur Reduzierung der Systemspannung in Anspruch genommen wird;
Figur 6 Schnittdarstellung einer Seillängenausgleichsvorrichtung, bei der die Montage des bowdenrohrseitigen Teils in das gehäuseseitige Teil von seiten des Adapters her erfolgt.

Die nachfolgend beschriebenen und in den Figuren dargestellten Ausführungsbeispiele wurden speziell für Anwendungen in Bowdenrohr-Fensterhebern entwickelt; sie können jedoch auch in anderen Bowdenzugsystemen eingesetzt werden. Die verschiedenen Varianten des Erfindungsprinzips lassen vielfältige Anpassungen an die speziellen Anforderungen des jeweiligen Anwendungsfalls zu.

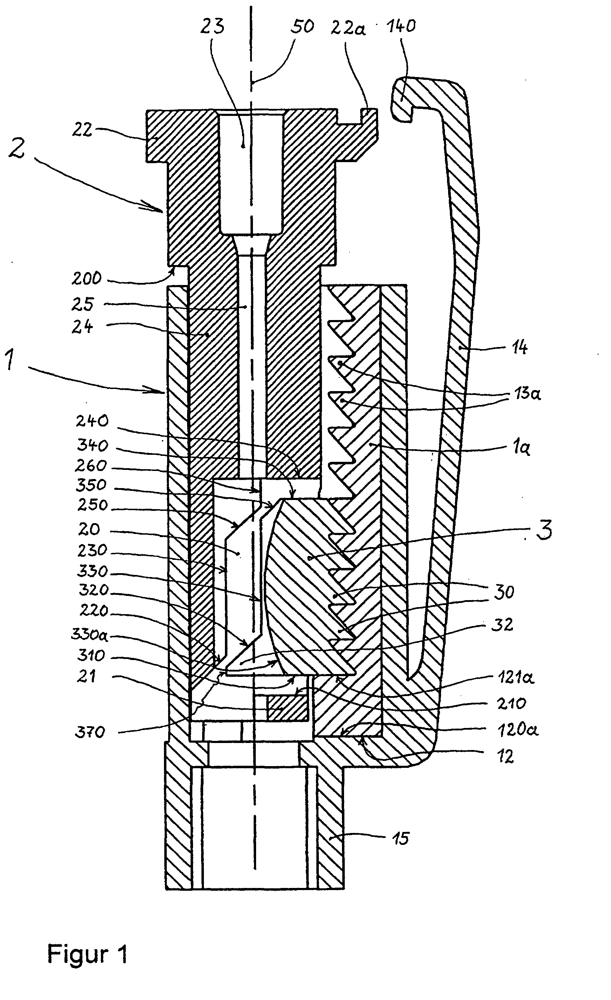

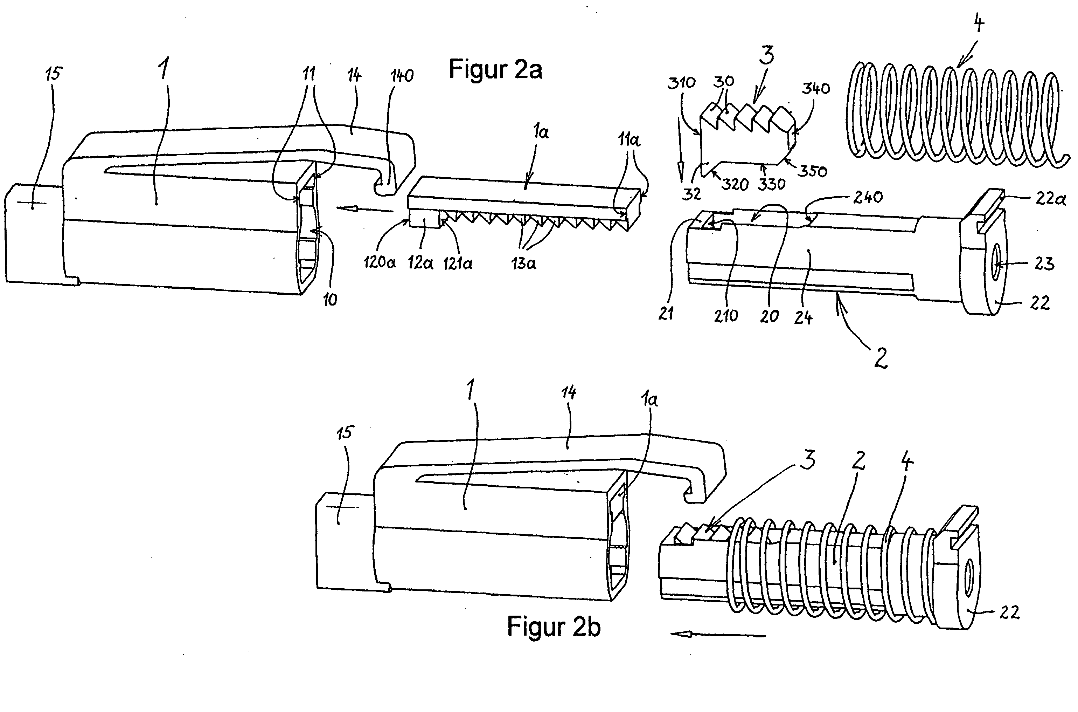

Die Vorrichtung zum Seillängenausgleich eines Bowdenzugsystems gemäß Figur 1 besteht aus insgesamt fünf Einzelteilen, die - bis auf die Feder 4 - alle als Kunststoffspritzteile gefertigt sind. Das Teil 1 kann auch in einen Lagerdeckel eines Seiltrommelgehäuses eines Bowdenrohr-Fensterhebers integriert sein, wobei der Lagerdeckel das sogenannte basisseitige Teil darstellt. Figur 2a zeigt diese Teile perspektivisch in einer Explosionsdarstellung. Demnach besteht die Vorrichtung aus einem gehäuseseitigen Teil 1 mit einem einstückig angeformten Federbügel 14, einem Einleger 1 a, der die gehäuseseitigen Rastelemente 13a trägt, dem bowdenrohrseitigen Teil 2 mit einer Bowdenrohraufnahme 23, einem Verriegelungselement 3, das in die Ausnehmung 20 des bowdenrohrseitigen Teils 2 eingesetzt wird, und einer Schraubenfeder 4, welche die für die Stellbewegung zum Zwecke der Seilausgleichsbewegung notwendige Kraft liefert.

Figur 2b zeigt die Vorrichtung unmittelbar vor ihrem Zusammenbau. Das Verriegelungselement 3 wurde bereits in die Ausnehmung 20 eingesetzt und die Feder 4 bis zum Anschlag gegen den Kopf 22 aufgeschoben, wobei gleichzeitig das Verriegelungselement 3 gegen Herausfallen gesichert ist. Um ein problemloses Einführen des bowdenseitigen Teils in den Hohlraum 10 des gehäuseseitigen Teils zu gewährleisten, dürfen die Rastelement 13a und 30 nicht aneinander stoßen. Deshalb muß das Verriegelungselement 3 vollkommen von der Ausnehmung 20 aufgenommen sein. Dies ist dann der Fall, wenn die Anschlagflächen 210 und 310 aufeinanderliegen. Der Einleger 1a wurde mit seinen Stegen 1 1 a in die Nuten 1 1 des gehäuseseitigen Teils 1 eingeschoben.

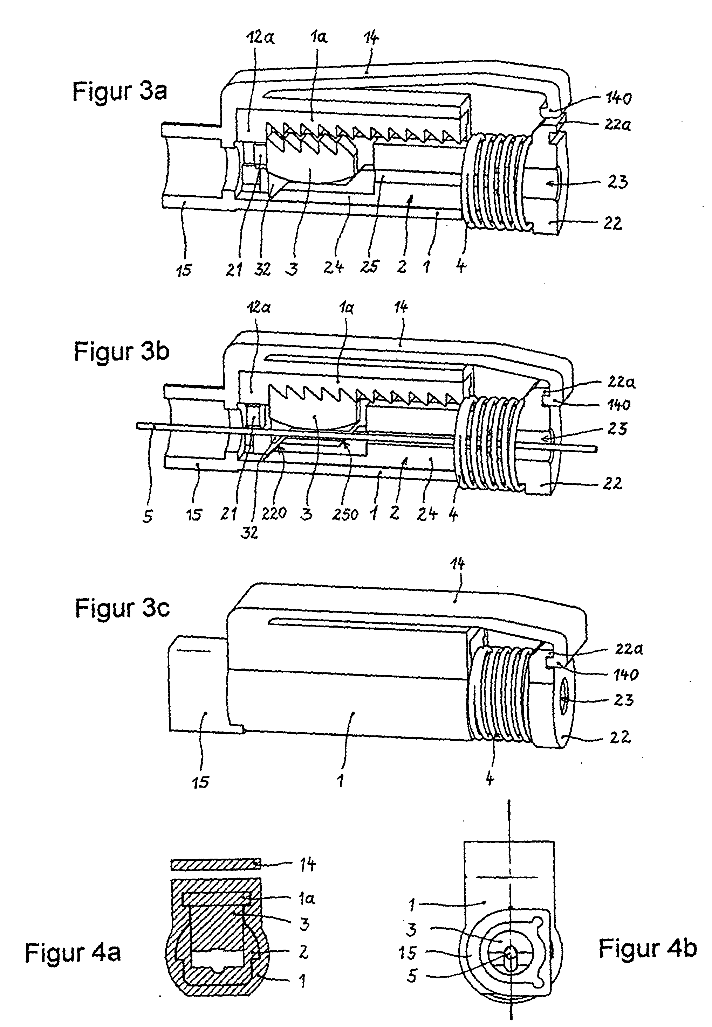

In Figur 3a ist die axial aufgebrochene erfindungsgemäße Vorrichtung nach dem Einführen des bowdenrohrseitigen Teils 2 dargestellt, wobei die Anschlagfläche 310 des Verriegelungselements 3 gerade die Anschlagfläche 121 a des Blocks 12a erreicht hat. Der Block 12a stützt sich seinerseits mit der Anschlagfläche 120a am Anschlag 12 des gehäuseseitigen Teils 1 ab (siehe auch Figuren 1 und 2a). Bei einem weiteren Eindringen des Schaftes 24 in den Hohlraum 10 des Gehäuses 1 verhindert der Block 12a, der über die Rastelemente 13a hinausragt, daß auch das Verriegelungselement 3 weiter eindringen kann. Dadurch kommt es zum Aufgleiten der Gleitflächen 320, 350 des Verriegelungselements 3 auf die Gleitflächen 220, 250 des Gehäuses 1, infolge dessen das Verriegelungselement 3 radial verschoben wird und mit seinen Rastelementen 30 teilweise in die Rastelemente 13a eingreift (nicht dargestellt). Somit wird zwischen dem Verriegelungselement 3 und der Seitenwand 230 des Gehäuses 1 der für die Durchführung des Seils 5 notwendige Freiraum geschaffen.

Figur 3b zeigt die Vorrichtung im verriegelten Montagezustand, bei dem die Rastnasen 22a, 140 des bowdenrohrseitigen Teils 2 bzw. des Federbügels 14 formschlüssig ineinandergreifen. Beim Hindurchführen des Seils 5 wurde das Verriegelungselement 3 weiter angehoben, so daß die Rastelemente 13a, 30 jetzt vollständig im Eingriff stehen. Aus Figur 3c ist eine perspektivische Außenansicht der Vorrichtung entnehmbar, deren Adapter 15 auf ein basisseitiges Teil (nicht dargestellt), z.B. ein Getriebegehäuse, aufgesteckt wird. Figur 4b zeigt, daß der Adapter 15 nicht rotationssymmetrisch ist. Dadurch wird ein Verdrehen der Vorrichtung verhindert.

Die Wirkungsweise der Seillängenausgleichsvorrichtung wird nachfolgend detailliert anhand der Figuren 1 und 3 erläutert: Im Anschluß an den Zusammenbau der Einzelteile zu einer vormontierten Einheit, wie sie in den Figuren 3b und 3c dargestellt ist, kann die Seillängenausgleichsvorrichtung in ein Bowdenzugsystem integriert werden. Dazu wird der Adapter 15 mit dem (nicht dargestellten) Gegenstück eines basisseitigen Teils zusammengefügt und das Bowdenrohr 6 in die Bowdenrohraufnahme 23 eingesteckt. Die Entriegelung des bowdenrohrseitigen Teils 2 durch den Federbügel 14 bedarf dann keines manuellen Eingriffs, wenn seitens des Bowdenrohres 6 während des Betriebs des Bowdenzugsystems Stützkräfte erwartet werden, die größer sind als die Federkraft der Feder 4. In diesem Falle wird das bowdenrohrseitige Teil 2 aus seiner Position gemäß Figur 3b soweit in das Gehäuse 1 geschoben, bis der Absatz 210 auf den Rand des Gehäuses 1 trifft. Dabei gelangen die Rastnasen 22a, 140 außer Eingriff und der Federbügel 14 springt nach außen. Selbst wenn diesem Entriegelungsvorgang nicht unmittelbar eine Seillängenausgleichsbewegung folgen sollte, bei der die Rastnase 22a axial an der Rastnase 140 vorbei geschoben wird, ist eine erneute Verriegelung ausgeschlossen.

Sobald eine Seillose vorliegt, drückt die Feder 4 das Teil 2 aus dem Gehäuse 1 soweit heraus, bis die Seillose ausgeglichen ist. Diese Stellbewegung entspricht quasi einer Bowdenrohrverlängerung. Dabei gelangt der Anschlag 210 des Bodens 21 des bowdenrohrseitigen Teils 2 mit der Anschlagfläche 310 des Verriegelungselements 3 in Eingriff und nimmt diese axial mit. Gleichzeitig erfolgt eine radiale Bewegung des Verriegelungselements 3, die den Eingriff der Rastelemente 13a und 30 löst und das Seil 5 mittels der Führungsfläche 330a aus der Zugachse 50 verschiebt. Diese Ausbeugung des Seils 5 beansprucht einen Teil der Seillose und kann nicht ausgeglichen werden.

Sobald der Bereich des Bowdenzugsystems, in dem die Seillängenausgleichsvorrichtung angeordnet ist, wieder belastet wird, strafft sich das Seil 5 und drückt die Verzahnungen 13a, 30 ineinander. Gleichzeitig kommt es zu einer axialen Setzbewegung des bowdenrohrseitigen Teils 2 bis dessen Anschlag 240 auf die Anschlagfläche 340 des Verriegelungselements 3 trifft. Während dieser Setzbewegung gleiten die winklig verlaufenden Gleitflächen 220, 250 des Gehäuses und die Gleitflächen 320, 350 des Verriegelungselements 3 aufeinander und drücken die Rastelemente 13a und 30 vollständig ineinander, sofern dies noch nicht durch die Straffung des Seils 5 erreicht werden konnte. Die Gleitflächen gehen in axial ausgerichtete Stützflächen 230, 260, 330, 370 über, die nach Abschluß der Setzbewegung des bowdenrohrseitigen Teils 2 aneinanderliegen und so die Verriegelungsstellung des Verriegelungselements 3 sichern.

Das vorgehaltene Spiel der Vorrichtung setzt sich also aus dem Weg der axialen Verschiebbarkeit des Verriegelungselements 3 zwischen den Anschlägen 210, 240 und aus der in die Vorrichtung verlagerten Seillose, verursacht durch die radiale Verschiebung des Verriegelungselements 3, zusammen. Das heißt natürlich auch, daß Stellbewegungen, die kleiner als der mögliche axiale Verschiebeweg des Verriegelungselements 3 in der Ausnehmung 20 sind, zu keiner neuen Raststellung des Verriegelungselements 3 und somit auch nicht zu einem Seillängenausgleich führen. Damit werden bleibende übermäßige mechanische Verspannungen im Bowdenzugsystem sicher verhindert.

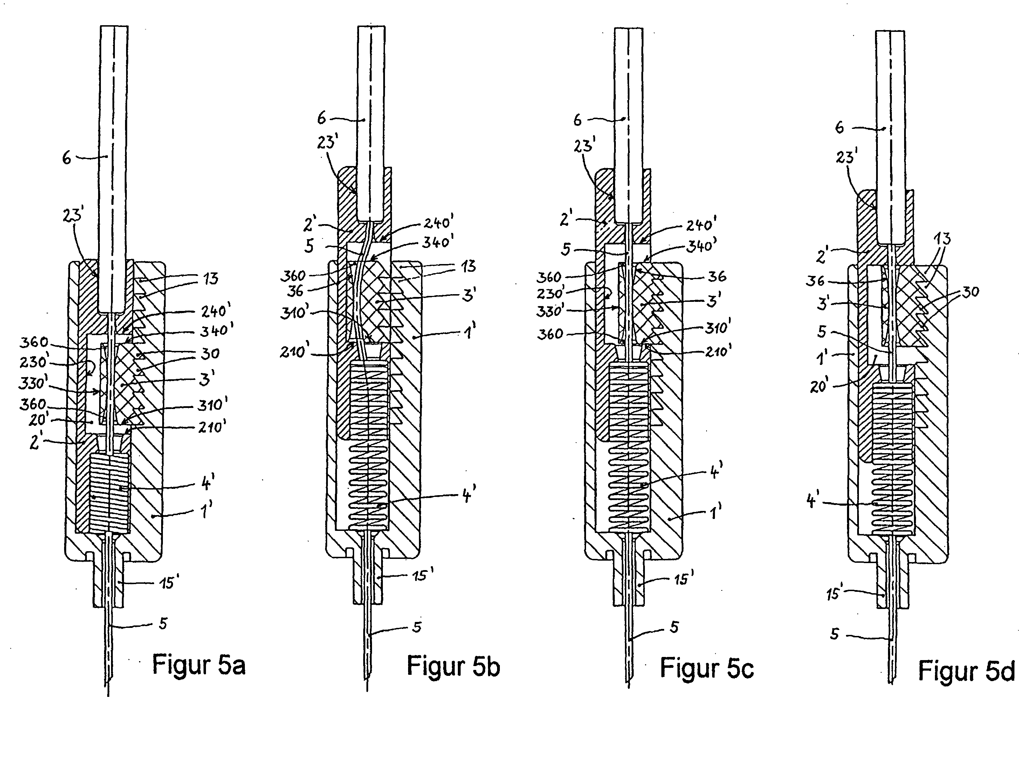

Das Ausführungsbeispiel von Figur 5a verwendet ein Gehäuse 1' mit einstückig integrierten Rastelementen 13, eine innenliegende Feder 4' und ein Verriegelungselement 3' mit einem Seilkanal 36 mit konisch sich erweiternden Kanalenden 360. Dies soll das Durchführen des Seils 5 durch das Verriegelungselement 3' erleichtern. Ebenso wie bei der voranbeschriebenen Erfindungsvariante, lagert das Verriegelungselement 3' in einer Ausnehmung 20', in der es zwischen den Anschlägen 210', 240' axial verschiebbar ist. Die Wirkungsweise dieser Vorrichtung entspricht der von Figur 1.

Figur 5a zeigt die Montageposition der Vorrichtung mit maximal komprimierter Feder 4' und eingerastetem Verriegelungselement 3'. Eine Seillose führte gemäß Figur 5b zu einer Seillängenausgleichsbewegung, indem die Feder 4' das bowdenrohrseitige Teil 2' teilweise aus dem Gehäuse 1' herausgedrückt hat, wobei auch die Rastelemente 13, 30 infolge einer radialgerichteten Seitwärtsbewegung außer Eingriff getreten sind. Mit der Straffung des Seils 5 wird der Eingriff der Verzahnungen 13, 30 wieder hergestellt (siehe Figur 5c). Bei erneuter Beanspruchung des Bowdenrohres 6 verursacht die davon ausgehende Stützkraft eine Rückstellbewegung des bowdenrohrseitigen Teils 2', bis der Anschlag 240' auf die Anschlagfläche 340' des Verriegelungselements 3' trifft (siehe Figur 5d). Die Rückstellbewegung umfaßt das für die Entspannung des Bowdenrohrsystems konstruktiv vorgehaltene Spiel.

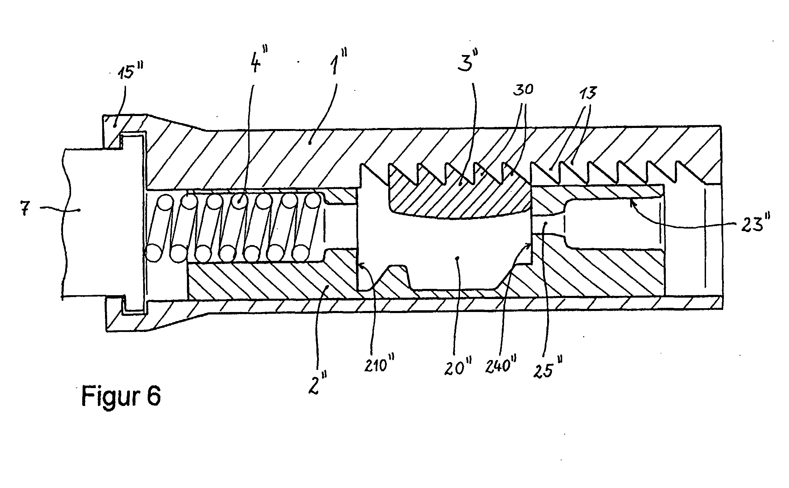

Der grundsätzliche Aufbau und die Wirkungsweise des Ausführungsbeispiels von Figur 6 entsprechen im wesentlichen den voranstehenden Beschreibungen. Der signifikanteste Unterschied besteht darin, daß das bowdenrohrseitige Teil 2" von seiten des Adapters 15" in das Gehäuse 1" eingeschoben werden kann. Dadurch wird eine einfache, ineinanderschachtelnde Montageweise ermöglicht, die nach folgendem Ablauf durchgeführt wird: Zunächst wird auf das Seilende das Gehäuse 1 ", anschließend das bowdenrohrseitige Teil 2" und dann die Feder 4" aufgefädelt. Nachdem das Verriegelungselement 3" in die Ausnehmung 20" eingesetzt wurde, kann das Gehäuse über alle Teile 2", 3", 4" hinweggezogen und mit dem Adapter 15" an der Basis befestigt werden. Diese Montagerichtung hat den Vorteil, daß sich die Rastelemente 13, 30 auch dann nicht ineinander verhaken können, wenn das Verriegelungselement etwas aus der Ausnehmung herausragt.

### Bezugszeichenliste

- 1: gehäuseseitiges Teil, Gehäuse
- 1': gehäuseseitiges Teil, Gehäuse
- 1": gehäuseseitiges Teil, Gehäuse
- 1a: Einleger
- 10: Hohlraum des Gehäuses
- 10': Hohlraum des Gehäuses
- 11: Nut
- 11a: Steg
- 12: Anschlag
- 12a: Block
- 13: sägezahnförmige Rastelemente
- 13a: sägezahnförmige Rastelemente
- 14: Federbügel
- 15: Adapter
- 15': Adapter
- 15": Adapter
- 120a: Anschlagfläche
- 121a: Anschlagfläche
- 140: Rastnase
- 2: bowdenseitiges Teil, verschiebbare Hülse
- 2': bowdenseitiges Teil, verschiebbare Hülse
- 2": bowdenseitiges Teil, verschiebbare Hülse
- 20: Ausnehmung zur Aufnahme des Verriegelungselements
- 20': Ausnehmung zur Aufnahme des Verriegelungselements
- 20": Ausnehmung zur Aufnahme des Verriegelungselements
- 21: Boden
- 22: Kopf
- 22a: Rastnase
- 23: Bowdenrohraufnahme
- 23': Bowdenrohraufnahme
- 23": Bowdenrohraufnahme
- 24: Schaft
- 25: Seilkanal
- 25": Seilkanal
- 200: Absatz
- 210: Anschlag
- 210': Anschlag
- 210": Anschlag
- 220: Gleitfläche
- 230: Seitenwand
- 230': Seitenwand
- 240: Anschlag
- 240': Anschlag
- 240": Anschlag
- 250: Gleitfläche
- 260: Stützfläche
- 3: Verriegelungselement
- 3': Verriegelungselement
- 3": Verriegelungselement
- 30: sägezahnförmige Rastelemente
- 32: Fortsatz
- 36: Seilkanal
- 310: Anschlagfläche
- 310': Anschlagfläche
- 320: Gleitfläche
- 330: Stützfläche
- 330': Rückwand
- 330a: Führungsfläche
- 340: Anschlagfläche
- 340': Anschlagfläche
- 350: Gleitfläche
- 360: konisches Kanalende
- 370: Stützfläche
- 4: Feder, Schraubenfeder
- 4': Feder, Schraubenfeder
- 4": Feder, Schraubenfeder
- 5: Seil
- 50: Zugachse, Seilachse
- 6: Bowdenrohr
- 7: Basis

## Patentansprüche

1. Vorrichtung zum automatischen, stufenweisen Seillängenausgleich eines Bowdenzugsystems, insbesondere eines Bowdenrohr-Fensterhebers,
- in der innerhalb eines von einer Feder (4, 4', 4'') gespannten Rohres ein Seil (5) geführt ist, wobei sich die Feder zwischen einem gehäuseseitigen Teil (1, 1', 1'') und einem dazu verschiebbaren bowdenrohrseitigen Teil (2, 2', 2'') abstützt,
- und mit einem Verriegelungselement (3, 3', 3''), das wenigstens ein Rastelement (30) trägt und zwischen zwei axial ausgerichteten, voneinander beabstandeten Anschlägen (210, 210', 210''; 240, 240', 240'') derart verschiebbar lagert, daß ein seillängenausgleichender Rastvorgang erst nach Überwindung eines vorgegebenen Stellweges erfolgen kann,
- und mit einer Vielzahl weiterer axial angeordneter Rastelemente (13, 13a), in die das wenigstens eine Rastelement (30) eingreifen kann, wenn das Verriegelungselement eine auf die axial angeordneten Rastelemente (13, 13a) gerichtete radiale Bewegung ausführt,
**dadurch gekennzeichnet,**
**daß** die axial ausgerichteten Anschläge (210, 210', 210", 240, 240', 240"), zwischen denen das Verriegelungselement (3, 3', 3") verschiebbar lagert, Bestandteil des bowdenrohrseitigen Teils (2, 2', 2") sind,
- **daß** das wenigstens eine Rastelement (30) des Verriegelungselements (3, 3', 3") radial nach außen gerichtet ist
- und **daß** die dazu korrespondierenden axial angeordneten Rastelemente (13, 13a) mit dem gehäusseitigen Teil (1, 1', 1 ") in Verbindung stehen.

2. Vorrichtung nach Anspruch 1, **dadurch gekennzeichnet, daß** das zur Vermeidung einer Verspannung des Bowdenzugsystems notwendige Spiel gewährleistet ist durch:
- eine axiale Verschiebbarkeit des Verriegelungselements (3, 3', 3") zwischen den Anschlägen (210, 210', 210", 240, 240', 240"), und/oder
- eine radiale Verschiebbarkeit des Verriegelungselements (3, 3', 3") zwischen den Rastelementen (13, 13a) des gehäusseitigen Teils (1, 1', 1") und der gegenüberliegenden Wandung (230, 230') des bowdenrohrseitigen Teils (2, 2', 2"), wobei das Seil (5) von der Zugachse (50) weggedrückt wird, und/oder
- einen Hinterschnitt für die ineinandergreifenden Rastelemente (13, 13a, 30).

3. Vorrichtung nach Anspruch 1 und 2, **dadurch gekennzeichnet, daß** sich zwischen den axial ausgerichteten Anschlägen (210, 210', 210", 240, 240', 240") eine Ausnehmung (20, 20', 20") zur Aufnahme des Verriegelungselements (3, 3', 3") erstreckt, deren Tiefe so groß ist, daß sie das Verriegelungselement (3, 3', 3") vollständig aufnehmen kann.

4. Vorrichtung nach einem der voranstehenden Ansprüche, **dadurch gekennzeichnet, daß** das Verriegelungselement (3) bei bowdenrohrseitiger Belastung zur Sicherung des Eingriffs der Rastelemente (13a, 30) gegen radiales Verschieben gesichert ist.

5. Vorrichtung nach Anspruch 4, **dadurch gekennzeichnet, daß** das Verriegelungselement (3) wenigstens einen Bereich aufweist, der bei bowdenrohrseitiger Belastung mit dem bowdenrohrseitigen Teil (2) in eine formschlüssige Verbindung bringbar ist, so daß das Verriegelungselement (3) gegen radiales Verschieben gesichert ist.

6. Vorrichtung nach Anspruch 4 und 5, **dadurch gekennzeichnet, daß** in den Endbereichen des Verriegelungselements (3) winklig zur Zugachse (50) des Seils (5) verlaufende Gleitflächen (320, 350) angeformt sind, die mit Gleitflächen (220, 250) des bowdenrohrseitigen Teils (2) in Eingriff treten können, wenn das Seil (5) entspannt ist und sich das Verriegelungselement (3) in der Nähe des endseitigen Anschlags (210) bzw. in einer mittleren Position zwischen den Anschlägen (210, 240) befindet, und daß sich an wenigstens eine der Gleitflächen (220, 250 bzw. 320, 350) eine Stützfläche (230, 260 bzw. 330, 370) anschließt, die miteinander in Eingriff bringbar sind, wenn sich das Verriegelungselement (3) in der Nähe des Anschlags (240) befindet.

7. Vorrichtung nach Anspruch 6, **dadurch gekennzeichnet, daß** das am weitesten innenliegende gehäuseseitige Rastelement (13a) einen Anschlag (121a) ausbildet, der radial weiter nach innen ragt als alle übrigen Rastelemente (13a) und bei vollständig in das Gehäuse (1) eingeführtem bowdenrohrseitigen Teil (2) zwischen den Anschlägen (210, 240) in der Nähe des Anschlags (210) liegt, und daß beim vollständigen Einführen des Teils (2) in das Gehäuse (1) der Anschlag (121a) auf die Anschlagfläche (310) des Verriegelungselements (3) trifft, wobei das Verriegelungselement (3) in eine mittlere Position zwischen die Anschläge (210, 240) und in eine von der Seitenwand (230) abgehobene Position gebracht wird, so daß das Seil (5) durch die Seillängenausgleichsvorrichtung geschoben werden kann.

8. Vorrichtung nach einem der voranstehenden Ansprüche, **dadurch gekennzeichnet, daß** die mit dem gehäuseseitigen Teil (1 , 1', 1 ") verbundenen axial angeordneten Rastelemente (13, 13a) und das wenigstens eine Rastelement (30) des Verriegelungselements (3, 3', 3") sägezahnförmig ausgebildet sind.

9. Vorrichtung nach einem der voranstehenden Ansprüche, **dadurch gekennzeichnet, daß** die axial ausgerichteten Anschläge (210, 210', 210", 240, 240', 240") derart beabstandet sind, daß das Verriegelungselement (3, 3', 3") zwischen den Anschlägen (210, 210', 210", 240, 240', 240") um einen Weg verschiebbar ist, der wenigstens der Teilung der Verzahnung (Rastelemente 13, 13a, 30) entspricht.

10. Vorrichtung nach einem der voranstehenden Ansprüche, **dadurch gekennzeichnet, daß** die axial angeordneten Rastelemente (13a) des gehäuseseitigen Teils (1) Bestandteil eines separaten Einlegers (1a) sind, der mit der Innenwandung des gehäuseseitigen Teils (1) verbindbar ist.

11. Vorrichtung nach Anspruch 10, **dadurch gekennzeichnet, daß** der Einleger (1a) als Schieber ausgebildet und axial in das gehäuseseitige Teil (1) bis zu einem Anschlag (12) einführbar ist und daß axial gerichtete Nuten (11) und Stege (11a) zur Fixierung des Einlegers (1a) vorgesehen sind.

12. Vorrichtung nach einem der voranstehenden Ansprüche, **dadurch gekennzeichnet, daß** das Seil (5) mit dem nichteingerasteten Verriegelungselement (3) derart in Eingriff steht, daß bei einer Straffung des Seils (5) das Verriegelungselement (3) wenigstens soweit in Richtung der korrespondierenden Rastelemente (13, 13a) verschoben wird, daß diese zumindest teilweise in die Rastelemente (30) eingreifen.

13. Vorrichtung nach einem der voranstehenden Ansprüche, **dadurch gekennzeichnet, daß** bei straffgezogenem Seil (5) und vollständig ineinandergreifenden Rastelementen (13a, 30) die dem wenigstens einen Rastelement (30) zugewandte Wandung (330a) des Verriegelungselements (3) mit dem Seil (5) gerade nicht in Berührung steht.

14. Vorrichtung nach Anspruch 12, **dadurch gekennzeichnet, daß** die dem Rastelement (30) des Verriegelungselements (3) zugewandte Wandung über die Zugachse (50) des Seils (5) hinausragt, so daß bei straffgezogenem Seil (5) und vollständig ineinandergreifenden Rastelementen (13a, 30) vom Seil (5) auf das Verriegelungselement (3) eine radiale Kraft in Verriegelungsrichtung ausgeübt wird.

15. Vorrichtung nach einem der voranstehenden Ansprüche, **dadurch gekennzeichnet, daß** das Verriegelungselement (3') einen Seilkanal (36) aufweist, der sich an seinen Enden (360) konisch erweitert.

16. Vorrichtung nach einem der voranstehenden Ansprüche, **dadurch gekennzeichnet, daß** das Verriegelungselement mit einer in die Verriegelungsrichtung wirkenden Feder in Verbindung steht.

17. Vorrichtung nach Anspruch 16, **dadurch gekennzeichnet, daß** die Feder einstückiger Bestandteil des Verriegelungselements ist.

18. Vorrichtung nach einem der voranstehenden Ansprüche, **dadurch gekennzeichnet, daß** das gehäuseseitige Teil (1) und das bowdenrohrseitige Teil (2) in einer Montageposition miteinander verriegelbar sind.

19. Vorrichtung nach Anspruch 18, **dadurch gekennzeichnet, daß** das gehäuseseitige Teil (1) mit einem Federbügel (14) in Verbindung steht, dessen freies Ende eine Rastnase (140) trägt, die mit einer Rastnase (22a) des bowdenrohrseitigen Teils (2) in Eingriff bringbar ist, wenn das bowdenrohrseitige Teil (2) am weitesten in das gehäuseseitige Teil (1) eingeführt ist, und daß der Federbügel (14) selbsttätig aus der Verriegelungsposition springt, wenn die Anschläge (240, 340) erstmals während des Betriebs der Vorrichtung aufeinandertreffen.

20. Vorrichtung nach Anspruch 18 und 19, **dadurch gekennzeichnet,** die zwischen den Teilen (1, 2) gespannte Feder (4) in ihrem maximal komprimierten Zustand eine geringere Federkraft aufweist als eine während des Betriebes zu erwartende Stützkraft des Bowdenrohres (6).

## Claims

1. Device for the automatic step-wise cable length compensation of a Bowden cable system, more particularly for a Bowden cable window lifter
- in which a cable (5) is guided inside a tube tensioned by a spring (4, 4', 4'') whereby the spring is supported between a part (1, 1', 1'') on the housing side and a part (2, 2', 2'') displaceable thereto on the Bowden cable side,
- and with a locking element (3, 3', 3'') which supports at least one detent element (30) and is mounted displaceable between two axially aligned stops (210, 210', 210"; 240, 240',240'') so that a detent process which compensates the cable length can only happen after overcoming a predetermined setting path,
- and with a number of further axially arranged detent elements (13, 13a) in which the at least one detent element (30) can engage when the locking element executes a radial movement directed to the axially mounted detent elements (13, 13a),
**characterised in that,**
the axially aligned stops (210, 210', 210'', 240, 240', 240'') between which the locking element (3, 3' , 3'') is displaceably mounted, are a constituent part of the part (2, 2', 2'') on the Bowden cable side,
- that the at least one detent element (30) of the locking element (3, 3', 3'') is aligned radially outwards
- and that the axially disposed detent elements (13, 13a) which correspond therewith are connected to the part (1, 1', 1'') on the housing side.

2. Device according to claim 1 **characterised in that** the play which is required to prevent tensioning of the Bowden cable system is guaranteed by:
- an axial mobility of the locking element (3, 3', 3'') between the stops (210, 210', 210'', 240, 240', 240'') and/or
- a radial displacement of the locking element (3, 3', 3'') between the detent elements (13, 13a) of the part (1, 1', 1'') on the housing side and the opposite wall (230, 230') of the part (2, 2', 2'') on the Bowden tube side whereby the cable (5) is pressed away from the tension axis (50) and/or
- a rear cut section for the interengaging detent elements (13, 13a, 30).

3. Device according to claims 1 and 2, **characterised in that** a recess (20, 20', 20'') extends between the axially aligned stops (210, 210', 210'', 240, 240', 240'') to hold the locking element (3, 3', 3''), the depth of which is so great that it can completely house the locking element (3, 3', 3'').

4. Device according to one of the preceding claims, **characterised in that** the locking element (3) is secured against radial displacement. in the event of strain on the Bowden cable side in order to secure the engagement of the detent elements (13a, 30).

5. Device according to claim 4, **characterised in that** the locking element (3) has at least one region which in the event of strain on the Bowden cable side can be brought into positive connection with the part (2) on the Bowden cable side so that the locking element (3) is secured against radial displacement.

6. Device according to claims 4 and 5, **characterised in that** slide faces (320, 350) are formed in the end regions of the locking element (3) at an angle to the tension axis (50) of the cable (5) and can enter into engagement with the slide faces (220, 250) of the part (2) on the Bowden cable side when the cable (5) is relaxed and the locking element (3) is located close to the end stop (210) or in a centre position between the stops (210, 240), and that at least one of the slide faces (220, 250 and 320, 350) is adjoined by a support face (230, 260 and or 330, 370 respectively), which can be brought into engagement with each other when the locking element (3) is located close to the stop (240).

7. Device according to claim 6, **characterised in that** the innermost detent element (13a) on the housing side forms a stop (121a) which projects radially further inwards than all the remaining detent elements (13a) and when the part (2) on the Bowden cable side is inserted completely into the housing (1) lies between the stops (210, 240) close to the stop (210), and that when inserting the part (2) completely into the housing (1) the stop (121a) strikes the stop face (310) of the locking element (3) whereby the locking element (3) is brought into a centre position between the stops (210, 240) and into a position lifted away from the side wall (230) so that the cable (5) can be pushed through the cable length compensating device.

8. Device according to one of the preceding claims, **characterised in that** the axially disposed detent elements (13, 13a) connected to the part (1, 1', 1'') on the housing side, and the at least one detent element (30) of the locking element (3, 3', 3'') have a saw-tooth structure.

9. Device according to one of the preceding claims, **characterised in that** the axially aligned stops (210, 210', 210'', 240, 240', 240'') are spaced from each other so that the locking element (3, 3', 3'') can be displaced between the stops (210, 210', 210'', 240, 240', 240'') by an amount corresponding to at least one division of the teeth (detent elements 13, 13a, 30).

10. Device according to one of the preceding claims, **characterised in that** the axially disposed detent elements (13a) of the part (1) on the housing side are a constituent part of a separate insert member (1a) which can be connected to the inner wall of the part (1) on the housing side.

11. Device according to claim 10, **characterised in that** the insert member (1a) is designed as a slider and can be inserted axially into the part (1) on the housing side up to a stop (12) and that axially aligned grooves (11) and webs (11a) are provided for fixing the insert member (1a).

12. Device according to one of the preceding claims, **characterised in that** the cable (5) engages with the non-engaged locking element (3) so that when the cable (5) becomes taut the locking element (3) is moved at least so far in the direction of the corresponding detent elements (13, 13a) that the latter engage at least in part in the detent elements (30).

13. Device according to one of the preceding claims, **characterised in that** when the cable (5) becomes taut and the detent elements (13,a, 30) fully engage in each other the wall (330a) of the locking element (3) facing the at least one detent element (30) does not come into contact with the cable (5).

14. Device according to claim 12, **characterised in that** the wall facing the detent element (30) of the locking element (3) projects beyond the tension axis (50) of the cable (5) so that when the cable (5) is taut and the detent elements (13a, 30) fully engage in each other a radial force is exerted from the cable (5) on the locking element (3) in the locking direction.

15. Device according to one of the preceding claims, **characterised in that** the locking element (3') has a cable channel (36) which expands conically at its ends (360).

16. Device according to one of the preceding claims, **characterised in that** the locking element is connected to a spring acting in the locking direction.

17. Device according to claim 16, **characterised in that** the spring is an integral constituent part of the locking element.

18. Device according to one of the preceding claims, **characterised in that** the part (1) on the housing side and the part (2) on the Bowden cable side can be locked together in an assembly position.

19. Device according to claim 18, **characterised in that** the part (1) on the housing side is connected to a spring bar (14) whose free end supports a detent nose (140) which can be brought into engagement with a detent nose (22a) of the part (2) on the Bowden cable side when the part (2) on the Bowden cable side is inserted furthest into the part (1) on the housing side, and that the spring bar (14) automatically springs out of the locking position when the stops (240, 340) first meet each other during operation of the device.

20. Device according to claims 18 and 19, **characterised in that** the spring (4) which is tensioned between the parts (1, 2) has in its maximum compressed state a lower spring force than a supporting force of the Bowden cable (6) which is to be anticipated during operation.

## Revendications

1. Dispositif pour la compensation automatique étagée de la longueur du câble d'un système de commande Bowden, en particulier d'un lève-vitre à gaine Bowden,
- dans lequel un câble (5) est guidé à l'intérieur d'une gaine précontrainte par un ressort (4, 4', 4"), le ressort prenant appui entre une partie (1, 1', 1") côté boîtier et une partie (2, 2', 2") côté gaine Bowden mobile par rapport à celle-ci,
- et comportant un élément de verrouillage (3, 3', 3"), qui porte au moins un élément d'enclenchement (30) et qui est monté mobile entre deux butées (210, 210', 210" ; 240, 240', 240") orientées axialement et écartées l'une de l'autre, de telle sorte qu'une opération d'enclenchement compensatrice de la longueur de câble peut s'effectuer uniquement après avoir franchi une course de positionnement prédéterminée,
- et comportant une multitude d'autres éléments d'enclenchement (13, 13a) agencés axialement, dans lesquels peut venir s'engager ledit au moins un élément d'enclenchement (30) lorsque l'élément de verrouillage exécute un mouvement radial dirigé vers les éléments d'enclenchement (13, 13a) agencés axialement,
**caractérisé en ce que**
- les butées (210, 210', 210", 240, 240', 240") orientées axialement entre lesquelles l'élément de verrouillage (3, 3', 3") est monté mobile font partie de la partie (2, 2', 2") côté gaine Bowden,
- ledit au moins un élément d'enclenchement (30) de l'élément de verrouillage (3, 3', 3") est dirigé radialement vers l'extérieur,
- et les éléments d'enclenchement (13, 13a) agencés axialement et correspondant à celui-ci sont en liaison avec la partie (1, 1', 1") côté boîtier.

2. Dispositif selon la revendication 1, **caractérisé en ce que** le jeu nécessaire pour éviter une contrainte du système de commande Bowden est assuré par :
- une mobilité axiale de l'élément de verrouillage (3, 3', 3") entre les butées (210, 210', 210" ; 240, 240', 240"), et/ou
- par une mobilité radiale de l'élément de verrouillage (3, 3', 3") entre les éléments d'enclenchement (13, 13a) de la partie (1, 1', 1") côté boîtier et la paroi opposée (230, 230') de la partie (2, 2', 2'') côté gaine Bowden, le câble (5) étant repoussé en éloignement de l'axe de traction (50), et/ou
- par une contre-dépouille pour les éléments d'enclenchement (13, 13a, 30) mutuellement engagés.

3. Dispositif selon les revendications 1 et 2, **caractérisé en ce qu'**un évidement (20, 20', 20") destiné à recevoir l'élément de verrouillage (3, 3', 3") s'étend entre les butées (210, 210', 210", 240, 240', 240") orientées axialement, évidement dont la profondeur présente une taille telle qu'il peut recevoir complètement l'élément de verrouillage (3, 3', 3").

4. Dispositif selon l'une des revendications précédentes, **caractérisé en ce que** lors d'une charge côté gaine Bowden, l'élément de verrouillage (3) est bloqué à l'encontre d'un déplacement radial pour bloquer l'engagement des éléments d'enclenchement (13a, 30).

5. Dispositif selon la revendication 4, **caractérisé en ce que** l'élément de verrouillage (3) comprend au moins une zone qui, lors d'une charge côté gaine Bowden, est susceptible d'être amenée en une liaison par coopération de formes avec la partie (2) côté gaine Bowden, de sorte que l'élément de verrouillage (3) est bloqué à l'encontre d'un déplacement radial.

6. Dispositif selon les revendications 4 et 5, **caractérisé en ce que** dans les zones d'extrémité de l'élément de verrouillage (3) sont conformées des surfaces de coulissement (320, 350) s'étendant sous un angle par rapport à l'axe de traction (50) du câble (5), qui peuvent venir en engagement avec des surfaces de coulissement (220, 250) de la partie (2) côté gaine Bowden, lorsque le câble (5) est détendu et que l'élément de verrouillage (3) se trouve à proximité de la butée terminale (210) ou dans une position médiane entre les butées (210, 240), et **en ce qu'**une surface d'appui (230, 260 ou 330, 370) se raccorde à l'une au moins des surfaces de coulissement (220, 250 ou 320, 350), qui sont susceptibles d'être amenées en engagement lorsque l'élément de verrouillage (3) se trouve à proximité de la butée (240).

7. Dispositif selon la revendication 6, **caractérisé en ce que** l'élément d'enclenchement (13a) côté boîtier situé le plus à l'intérieur forme une butée (121a) qui fait saillie radialement vers l'intérieur plus loin que tous les autres éléments d'enclenchement (13a), et qui, lorsque la partie (2) côté gaine Bowden est introduite complètement dans le boîtier (1), se trouve entre les butées (210, 240) à proximité de la butée (210), et lors de l'introduction complète de la partie (2) dans le boîtier (1) la butée (121a) rencontre la surface de butée (310) de l'élément de verrouillage (3), l'élément de verrouillage (3) étant amené jusque dans une position médiane entre les butées (210, 240) et dans une position soulevée depuis la paroi latérale (230), de sorte que le câble (5) peut être poussé à travers le dispositif de compensation de longueur de câble.

8. Dispositif selon l'une des revendications précédentes, **caractérisé en ce que** les éléments d'enclenchement (13, 13a) agencés axialement et reliés à la partie (1, 1', 1") côté boîtier et ledit au moins un élément d'enclenchement (30) de l'élément de verrouillage (3, 3', 3") sont réalisés en forme de dents de scie.

9. Dispositif selon l'une des revendications précédentes, **caractérisé en ce que** les butées (210, 210', 210", 240, 240', 240") orientées axialement sont écartées de telle sorte que l'élément de verrouillage (3, 3', 3") entre les butées (210, 210', 210", 240, 240', 240") est mobile d'un trajet qui correspond au moins au pas de la denture (éléments d'enclenchement 13, 13a, 30).

10. Dispositif selon l'une des revendications précédentes, **caractérisé en ce que** les éléments d'enclenchement (13a) agencés axialement de la partie (1) côté boîtier font partie d'un insert séparé (1a) qui est susceptible d'être relié à la paroi intérieure de la partie (1) côté boîtier.

11. Dispositif selon la revendication 10, **caractérisé en ce que** l'insert (1a) est réalisé sous forme de tiroir et est susceptible d'être introduit axialement dans la partie (1) côté boîtier jusqu'à une butée (12), et **en ce qu'**il est prévu des gorges (11) dirigées axialement et des barrettes (11a) pour fixer l'insert (la).

12. Dispositif selon l'une des revendications précédentes, **caractérisé en ce que** le câble (5) est en engagement avec l'élément de verrouillage (3) non enclenché, de telle sorte que lors d'un tensionnement du câble (5) l'élément de verrouillage (3) est déplacé dans la direction des éléments d'enclenchement correspondants (13, 13a) au moins aussi loin que ceux-ci s'engagent au moins partiellement dans les éléments d'enclenchement (30).

13. Dispositif selon l'une des revendications précédentes, **caractérisé en ce que** lorsque le câble (5) est tendu et que les éléments d'enclenchement (13a, 30) s'engagent mutuellement complètement, la paroi (33a) de l'élément de verrouillage (3) tournée vers ledit au moins un élément d'enclenchement (30) n'est tout juste pas en contact avec le câble (5).

14. Dispositif selon la revendication 12, **caractérisé en ce que** la paroi tournée vers l'élément d'enclenchement (30) de l'élément de verrouillage (3) dépasse au-delà de l'axe de traction (50) du câble (5), de sorte que lorsque le câble (5) est tendu et que les éléments d'enclenchement (13a, 30) s'engagent mutuellement complètement, le câble (5) exerce une force radiale dans la direction de verrouillage sur l'élément de verrouillage (3).

15. Dispositif selon l'une des revendications précédentes, **caractérisé en ce que** l'élément de verrouillage (3') présente un canal à câble (36) qui va en s'élargissant coniquement à ses extrémités (360).

16. Dispositif selon l'une des revendications précédentes, **caractérisé en ce que** l'élément de verrouillage est en liaison avec un ressort agissant dans la direction de verrouillage.

17. Dispositif selon la revendication 16, **caractérisé en ce que** le ressort fait partie intégrale de l'élément de verrouillage.

18. Dispositif selon l'une des revendications précédentes, **caractérisé en ce que** la partie (1) côté boîtier et la partie (2) côté gaine Bowden sont susceptibles d'être verrouillées l'une avec l'autre dans une position de montage.

19. Dispositif selon la revendication 18, **caractérisé en ce que** la partie (1) côté boîtier est en liaison avec un étrier-ressort (14) dont l'extrémité libre porte un bec d'enclenchement (140) qui est susceptible d'être amené en engagement avec un bec d'enclenchement (22a) de la partie (2) côté gaine Bowden lorsque la partie (2) côté gaine Bowden est introduite le plus loin dans la partie (1) côté boîtier, et **en ce que** l'étrier-ressort (14) saute automatiquement hors de la position de verrouillage lorsque les butées (240, 340) se rencontrent pour la première fois pendant le fonctionnement du dispositif.

20. Dispositif selon les revendications 18 et 19, **caractérisé en ce que** dans son état comprimé au maximum le ressort (4) bandé entre les parties (1, 2) présente une force élastique inférieure à une force d'appui de la gaine Bowden (6) prévisible pendant le fonctionnement.
